# EUROPEAN PATENT APPLICATION

(11) **EP 3 799 825 A1**
(43) Date of publication of application: **07.04.2021**
(21) Application number: 19201095.7
(22) Date of filing: 02.10.2019
(51) Int. Cl.: A61C 8/00

(54) **THREADLESS DENTAL IMPLANT, SYSTEM INCLUDING A THREADLESS DENTAL IMPLANT, AND METHOD OF ATTACHMENT OF A THREADLESS DENTAL IMPLANT**

(71) Applicant: Ruetschi Technology AG, 3286 Muntelier (CH)
(72) Inventor: CHENAUX, David, 2035 Corcelles (CH)
(74) Representative: Grosfillier, Philippe

(57) **Abstract**

A dental implant system including a jaw bone anchor forming a hollow structure with an cylindrical open inner area, the jaw bone anchor including a cylindrical wall having an outer surface and an inner surface, the wall having a plurality of openings, and an attachment element arranged at a jaw-bone facing section of the jaw bone anchor, and a dental abutment for attachment to the jaw bone anchor via the attachment element, a jaw-bone facing section of the dental abutment having an exterior shape that is complementary to the cylindrical open inner area inside the inner surface of the cylindrical wall.

## Description

### FIELD OF THE INVENTION

The present application is directed to the field of dental implants, the field of manufacturing dental implants, and field of dental implant systems and methods of implanting a dental implant to a jaw bone.

### BACKGROUND

In the field of dental implants, the state of the art has proposed some devices that do not rely on a threading for attachment to a jaw bone. For example, U.S. Patent No. 8,167,619 is directed to an expandable dental implant having an envelope 1 with narrow longitudinal slits 19 to form deformable clasps 21, and conical expander member 20 arranged inside envelope 1, such that elastically deformable clasps 21 are adapted to expand laterally outwards as an expander 20 is longitudinally displaced by a displacing means along the main longitudinal axis of the implant towards the apical end. As expander member 20 is coronally displaced, clasps 21 are gradually urged apically outwards. Substantially radial forces applied to expander 20 by each leg at corresponding contact points B' and C' prevent the expander member from being apically displaced. When the displacing means is detached from the expander 20, the expander 20 is immobilized, and will not be loosened over the course of time.

U.S. Patent No. 6,273,720 is directed to a dental implant system including an implant 10 having a narrow gauge body 12 which is press fitted into a receptor site formed in the jawbone 14 of a dental patient. Before installation of the implant 10 an incision is made in the gum tissue of the patient and the underlying bone is exposed. A drill having a drill bit of a configuration matching the configuration of the implant is used to bore a hole in the jawbone 14 of a size slightly smaller than the circumference of the implant body 12. This permits the implant 10 to be press fitted into the bored hole. The exterior of the implant body 12 should preferably have a plurality of serrations 24 which are spaced longitudinally apart along the vertical height of the implant 10 to facilitate the seating of a plasma sprayed coating of hydroxyl apatite "HA" before the implant 10 is press fitted into the jawbone 14.

Brazilian Patent Application No. 202012010880 discusses a threadless dental implant having a straight horizontal base 2, from which cylindrical pillars 3 vertically project upwardly parallel to each other, the horizontal base 2 and the cylindrical pillars 3 forming a U-shape, wherein the pillars 3 have central channels 4 with a rectangular upper profile, for receiving a slap implant 5 and abutment elements 6.

Despite all the progress made in the field of dental implants, and attempts having been made to find solutions with threadless dental implants, strongly improved dental implants that do not rely on a threading for threadable attachment to the jaw bone are strongly desired, to improve mechanical attachment and its durability, improve bone healing, osso-intergration, and for simplified and efficient handling of the dental implant, and to provide for a cost-effective solution.

### SUMMARY

According to an aspect of the present invention, a dental implant system is provided. The dental implant system preferably includes a jaw bone anchor forming a hollow structure with an cylindrical open inner area, the jaw bone anchor including, a cylindrical wall having an outer surface and an inner surface, the wall having a plurality of openings, and an attachment element arranged at a jaw-bone facing section of the jaw bone anchor, and a dental abutment for attachment to the jaw bone anchor via the attachment element, a jaw-bone facing section of the dental abutment having an exterior shape that is complementary to the cylindrical open inner area inside the inner surface of the cylindrical wall.

According to another aspect of the present invention, an expandable jaw bone anchor for threadless engagement with a jaw bone is provided. Preferably, the jaw bone anchor includes a cylindrical wall having an outer surface and an inner surface, the cylindrical wall forming a hollow structure with a cylindrical open inner area, the cylindrical wall having a plurality of openings, and an attachment element arranged at a jaw-bone facing section of the jaw bone anchor, wherein the expandable cylindrical wall is configured to be radially and plastically expanded.

According to still another aspect of the present invention, a method for anchoring a dental implant to a jaw bone drill hole is provided. Preferably, the method includes the steps of inserting a jaw bone anchor with an cylindrical open inner area into the jaw bone drill hole, the jaw bone anchor including a cylindrical wall having an outer surface and an inner surface, the wall having a plurality of openings, and an attachment element arranged at a jaw-bone facing section of the jaw bone anchor, and radially expanding the cylindrical wall of the jaw bone anchor towards bone structures of the jaw bone drill hole.

The above and other objects, features and advantages of the present invention and the manner of realizing them will become more apparent, and the invention itself will best be understood from a study of the following description with reference to the attached drawings showing some preferred embodiments of the invention.

### BRIEF DESCRIPTON OF THE SEVERAL VIEWS OF THE DRAWINGS

The accompanying drawings, which are incorporated herein and constitute part of this specification, illustrate the presently preferred embodiments of the invention, and together with the general description given above and the detailed description given below, serve to explain features of the invention.

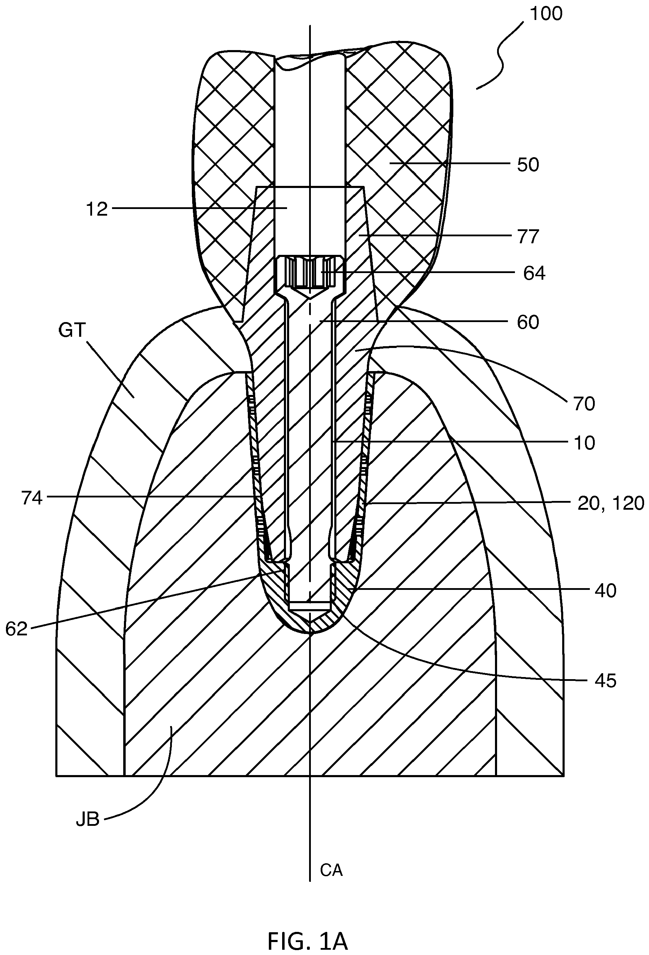

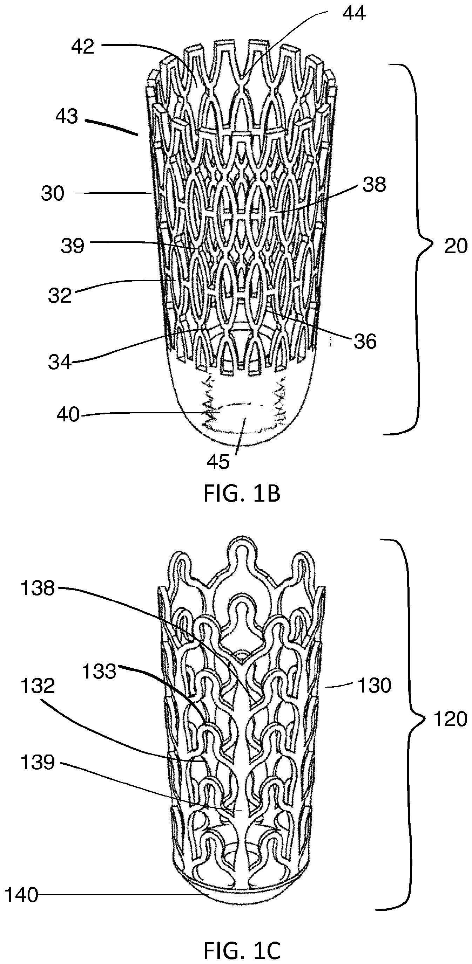

FIG. 1A exemplary illustrates a cross-sectional view of the complete and assembled dental implant 100 attached to a jaw bone JB of a living being, and FIGs. 1B and 1C show perspective views of exemplary expandable jaw bone anchor 20, 120 for use with the dental implant system 100, and FIGs ID and IE exemplarily show two different cross-sectional views of the expandable jaw bone anchor 20, 120 in two different states, with FIG. ID showing the relaxed, non-expanded state with abutment 70 being only partially or not yet inserted into cylindrical open inner area 42 of jaw bone anchor 20, 120, and FIG. IE showing the expanded, extended state, where abutment 70 is fully inserted into cylindrical open inner area 42 applying expansion force EF to jaw bone JB;
FIG. 2A exemplarily shows a perspective view of the dental abutment 70 and expandable jaw bone anchor 20 engaged with each other by a screw 60 without showing jaw bone JB and crown 50, and FIG. 2B exemplarily shows a perspective view of the dental abutment 70 and expandable jaw bone anchor 20 engaged with each other by attachment screw 60, and crown 50;
FIGs. 3A to 3C shows an exemplary placement and expansion tool 200 for use with dental implant 100, specifically with expandable jaw bone anchor 20, 120, and for use with the method of attaching a jaw bone anchor to a jaw bone of a living being, placement and expansion tool working in conjunction with dental abutment 70;
FIG. 4A to 4H show different steps in the method of attaching a dental implant 100 to a jaw bone JB of a living being, using the expandable jaw bone anchor 20, 120;
FIG. 5 shows a variant of an exemplary expansion tool 200 using an elastomeric ring and two pressure disks;
FIG. 6A shows a cross-sectional view of a variant of the expandable jaw bone anchor 20, 120, made of different layers, and FIG. 6B shows another variant with a cross-sectional view having surface structurations 31; and
FIGs. 7A and 7B exemplarily show a side and a cross-sectional view of another embodiment, in which the dental abutment 70 and the crown 50 are combined into a single device, to form integrated single tooth restoration element 90.
Herein, identical reference numerals are used, where possible, to designate identical elements that are common to the figures. Also, the images are simplified for illustration purposes and may not be depicted to scale.

### BRIEF DESCRIPTION OF THE SEVERAL EMBODIMENTS

A first aspect of the jaw bone anchor for a dental implant system, the method of anchoring or otherwise attaching a dental implant to a jaw of a subject, dental patient, or living being, or the dental implant system is shown with an exemplary cross-sectional view of the complete dental implant 100 shown in FIG. 1A, and perspective views in FIGs. 1B and 1C showing exemplary expandable jaw bone anchor 20, 120 for the dental implant system 100. Throughout this description, the attachment of the implant system 100 is described as being an attachment to the jaw bone JB, this bone includes attachments to the upper jaw bone, the maxilla, and the lower jaw bone, the mandible. Dental implant 100 preferably includes a crown 50, a dental abutment 70 including a non-metallic implant body or fixture, a traversing hole or bore 10 fully traversing the dental abutment along a center axis CA or axis of longitudinal extension, an attachment screw 60, and an expandable jaw bone anchor 20, 120 having at least a jaw-bone facing side made of a titanium-based material, for example but not limited to a commercially pure titanium, titanium alloys, titanium nitride (TiN). Jaw bone anchor 20, 120 includes a hollow structure, formed as a cylindrical wall 30, with an cylindrical open inner area 42, the cylindrical open inner area 42 preferably slightly tapered towards the jaw bone facing side, which means that a coronal diameter is somewhat larger than an apical diameter, which is the lower side as shown in the representation of FIG 1A. Moreover, the cylindrical wall 30 has an outer surface 43 and an inner surface 44, the outer surface facing the jaw bone JB, wall 30 having a plurality of wall-traversing openings 32, 34, and having a bottom portion 40 with an attachment element 45 arranged at a jaw-bone facing section of the jaw bone anchor, the attachment element 45 configured to engage with attachment screw 60 that can traverse the dental abutment 70 by traversing hole 10. In a variant, the openings are small wall-traversing slits arranged in parallel with the axis of longitudinal extension CA that can open to larger or wider slits upon radial expansion of cylindrical wall 30. Inner surface 44 of cylindrical wall 30 is shaped complementary to an outer surface 74 of a jaw-bone facing section of dental abutment 70. Preferably, jaw-bone facing section of dental abutment 70 has a coronal diameter that is somewhat larger than an apical diameter.

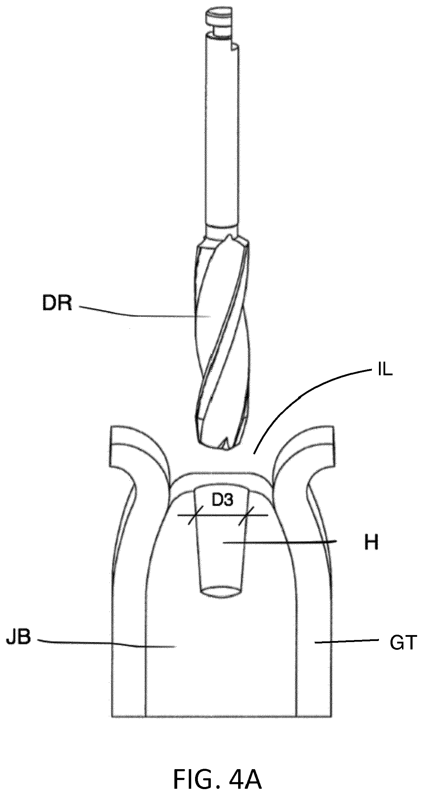

As shown in FIG. 1A, dental abutment 70 is tightly fastened to jaw bone anchor 20, 120, by attachment screw 60 that is threadably engaged with a thread that is formed in attachment element 45, and an outer surface 74 of a jaw-bone facing section of dental abutment 70 is in contact and tightened towards an inner surface 44 of cylindrical wall 30. Jaw bone anchor 20, 120 is designed such that it is slightly shorter or less deep than a hole H (see FIG. 4A) that has been drilled into the jaw bone JB at an incision location through gum tissue GT for accommodating the jaw bone anchor 20, 120, for ultimately holding the crown 50 via dental abutment.

FIGs. 1B and 1C show different variants of the radially-expandable jaw bone anchor 20, 120, having a cylindrical cup-shape with traversing openings therein. A first common feature for both variants of jaw bone anchor 20, 120 is that outer surface 43 of cylindrical wall 30 of expandable jaw bone anchor 20, 120, while possibly having different structurations for bone engagement and ossointegration, does not need a threading or other mechanism for threadable engagement of jaw bone anchor 20, 120 with jaw bone JB. A second common feature of jaw bone anchor 20, 120 is that cylindrical wall 30 can have different types of traversing openings 32, 34 or 132 that permit the radial expansion from a first diameter D1 to a second, increased diameter D2. The traversing openings 32, 34, and traversing openings 132 are arranged such that cylindrical wall 30 can be radially expanded in a direction that is substantially perpendicular and away from the center rotational axis CA, to have an increased diameter D2, and thereby somewhat increasing a surface area of the openings 32, 34, 132 themselves, while axial expansion of a length L of cylindrical wall 30 is prevented or at least substantially less prominent as compared to the radial expansion. For example, the radial expansion feature is provided by the fact that there may be no continuous element, material, strut, wall, bar, rod, etc. that is arranged along a line surrounding or encircling the cylindrical wall 30, 130, while it is possible that there is a continuous element, material, strut, wall, bar, rod, etc. in a axial direction along cylindrical wall 30. A thickness of wall 30, 130 itself can be chosen to be relatively thin, preferably between 0.1 mm and 1 mm, allowing for reduced use of expensive material and at the same time permitting easy radial and also at least a partially plastic expansion.

For example, in the variant of jaw bone anchor 120 of FIG. 1C, exemplarily seven (7) different continuous axial struts 139 are forming wall 139, laterally interconnected to each other with arc-like elements 132 having a horseshow-shaped or semi-circular element 133. While continuous axial struts 139 are arranged to provide for axial stiffness to preserve length L of jaw bone anchor 120, with arc-like elements 132 having a horseshow-shaped or semi-circular elements 133 interconnect to continuous axial struts 139 to allows for a radial expansion of circular wall 130 and lateral expansion of horseshow-shaped or semi-circular elements 133, thereby allowing for an increases distance between continuous axial struts 139 when circular wall 130 is expanded.

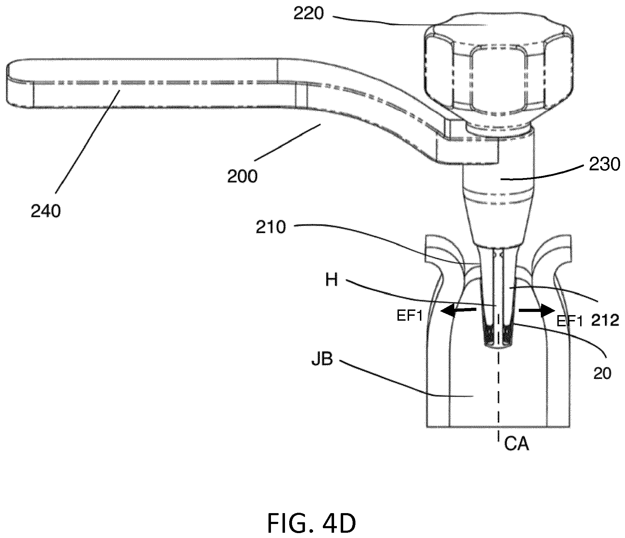

With respect to FIG. 1B, jaw bone anchor 20 has a cylindrical wall 30 including an interconnected mesh having oval- or elliptically-shaped openings 32, the long axis of oval- or elliptically-shaped openings 32 arranged in parallel to a rotational axis or axis of longitudinal extension of jawbone anchor, the oval- or elliptically-shaped openings 32 interconnected to each other on the longer side, e.g. in a tangential direction of cylindrical wall 30 by struts 38, and interconnected on the shorter side, e.g. in a longitudinal or axial direction by struts 39. Thereby, cross-shaped openings 34 are formed between four (4) adjacently arranged openings 32. Oval- or elliptically-shaped openings 32 can therefore laterally expand, upon application of an expansive or expansion force EF from the open inner area 42 of cylindrical wall 30, so that the shorter axis can increase, to provide for an expansion of diameter D of cylindrical wall 30, while given the structural arrangement, an expansion in a length direction is substantially prevented. In a variant, the structure and material of cylindrical wall can be chosen such that expansion force EF may apply an at least partial plastic deformation, such that expansion force EF will force cylindrical wall 30 to a stable, expanded state, as explained below with FIGs. 4D to 4F where expansion tool 210 may be removed after the expansion.

Another common feature of cylindrical wall 30, 130 of jaw bone anchor 20, 120 is that the inner surface 34 of wall 30, 130 is substantially free from structurations or embossing for establishing a curved contact surface with outer surface 74 of a jaw-bone facing section 78 of dental abutment 70 with inner surface 34. In this respect, a surface of jaw-bone facing section 78 of dental abutment 70 has a smooth but curved shape, forming a tapered cylinder towards the apical side. At the same time, an outer surface 43 of cylindrical wall 30, 130 is made to be structured, for example to have features that aid ossointegration of jaw bone anchor 20, 120 to a jaw bone JB. The structuration can include but is not limited to a roughened surface having a predetermined granularity, grooves, protrusions, a trabecular structure to match the structuration of the jaw bone JB.

In another variant, cylindrical walls 30, 130 of jaw bone anchor 20, 120, can be made as a diamond-shaped mesh, having diamond-shaped openings. Preferably, the diamond-shaped openings can be symmetrical, having a longer axis parallel to central axis CA, and a shorter axis that is horizontal or tangential to cylindrical walls 30, 130. This favors expansion in a radial direction away from center axis CA, whilst minimizing expansion in a direction parallel to center axis CA for maintaining length L. In addition, it is possible that diamond-shaped mesh is reinforced along directions parallel to central axis CA, for example continuous axial struts 139 providing for axial stiffness to preserve length L of jaw bone anchor 20, 120. As another variant, cylindrical walls 30, 130 of jaw bone anchor 20, 120, can be made as a square or rectangular mesh, made of continuous axial struts in a direction that is parallel to center axis CA, but is made of circular zig-zagged, wavy or undulated struts that go around the center axis CA, again allowing for radial expansion to a wider diameter D2, but preserving the length L.

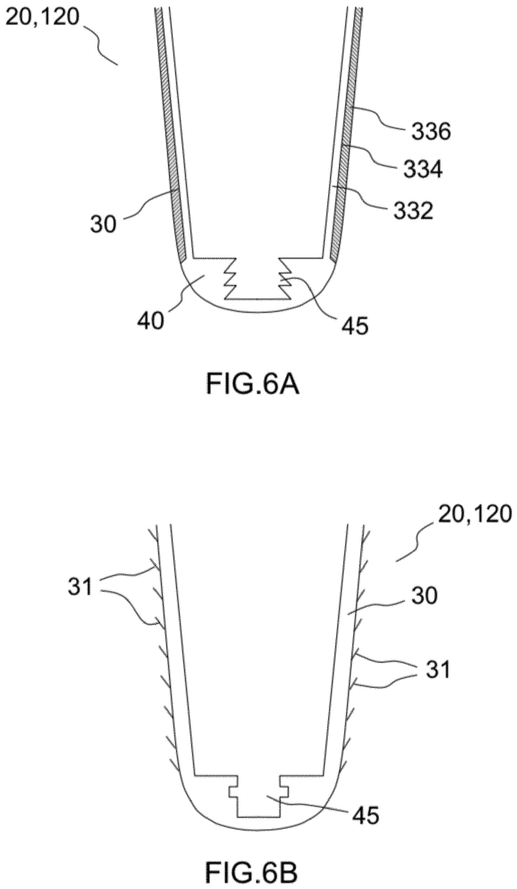

Other aspects of jaw bone anchor 20, 120 may include structurations 31 on outer surface 43 of the cylindrical wall 30, for example but not limited to knobs, protrusions, pyramids, cones, ramps, tabs, plates, hooks, tubes, edges, fish scales, as shown exemplarily in FIG. 6B. These structurations 31 can be chosen to be small in protrusion height in a radial direction, for example having a height that is smaller than a wall thickness of cylindrical wall 30, or less than 25% of the wall thickness. The structurations 31 are can be configured for three purposes, first two make sure that jaw bone anchor 20, 120, once placed to its final osso-integration position, will not move back outward out of hole H along a direction of axis CA, second to make sure that jaw bone anchor 20, 120 in the final osso-integration position will not rotate around axis CA, for example a rotation caused by any type of tool that is applied to jaw bone anchor, and third to further provided for osso-integration structures that will held osso-integration, for example to hold any type of osso-integration paste or agent, or to provide for structurations in size that can potentially protrude into bone cavities of jaw bone JB. For example, structurations of outer surface 43 of the cylindrical wall 30 can be sloped tabs or ramps, the slope being oblique to central axis CA, sloped towards the upper end of jaw bone anchor, to somewhat lock jaw bone anchor 20, 120 into hole H when inserted, as tabs will engage and retain to bone wall structures of hole H. For example, it is possible that tabs that form structurations 31 are elements of the material of wall 30 that are radially bent outwards to form sloped tabs. Also, the variant shown in FIG. 6B shows attachment element 45 of jaw bone anchor 20, 120 as a bayonet locking structure, instead of a threading.

FIGs ID and IE exemplarily show two different cross-sectional views of the jaw bone anchor 20, 120 in two different states, and explain steps of the method where jaw bone anchor is expanded, according to a first embodiment of the attachment or anchoring method. FIG. ID shows jaw bone anchor 20, 120 in a relaxed, non-expanded state, jaw bone anchor 20, 120 having a unexpanded or rest diameter D1, jaw bone anchor 20, 120 inserted into to drilled hole H of jaw bone JB, and FIG. IE showing the jaw bone anchor 20, 120 in an expanded, pressured state, jaw bone anchor 20, 120 having a radially expanded or pressured diameter D2 that is larger than D1, where a substantial portion of the outer surface 43 of cylindrical wall 30 is in pressured contact with structures of the jaw bone JB that have been exposed by a drilled hole H, for fitting and ossointegration of jaw bone anchor 20, 120 to jaw bone JB. In the variant shown, the transition from the first, non-expanded state to the second, expanded state of jaw bone anchor 20, 120 is done by the insertion of dental abutment 70 into inner area 42 of jaw bone anchor 20, 120 and them the pressing down of dental abutment 70 progressively towards the jaw bone anchor 20, 120. This can be done by first manually inserting dental abutment 70 into inner area 42 of jaw bone anchor 20, 120, as shown in FIG. ID, and thereafter placing attachment screw 60 through traversing hole 10 and turning attachment screw 60 so that lower threading 62 of attachment screw 60 threadably engages with attachment element 45 of jaw bone anchor 20, 120, and progressively approaches dental abutment 70 to jaw bone anchor 20, 120 by the threadable engagement between lower threading 62 and attachment element 45.

With jaw bone facing section 78 of dental abutment 70 being slightly conical and tapered towards the jaw bone facing side, and its outer surface 74 having no surface structurations, the progressive insertion via screw 60 along an axis of longitudinal extension or center axis CA will radially expand jaw bone anchor 20, 120 to press against inner walls of jaw bone JB at the hole H. FIG. IE shows the abutment 70 that is fully inserted to jaw bone anchor 20, 120 by threadable engagement of screw 60 with lower section 40 of jaw bone anchor 20, 120, where a diameter of jaw bone anchor 20, 120 has been radially expanded to D2 by expansion force EF, from an initial unexpanded diameter D1 shown in FIG. ID. To make sure that jaw bone anchor 20, 120, during turning and tightening of attachment screw 60 with a screw driver, and the radial expansion thereof, does not rotate inside hole H with screw 60 and screw driver, and that dental abutment 70 does not rotate relative to jaw bone anchor 20, 120, a plier or pincer-like tool can be used to hold onto crown-facing section 77 and dental abutment, or other device to hold on to dental abutment 70, held by one hand of the surgeon, operator, or user, and with the other hand the screw driver is turned or rotated, for tightening screw 60 and thereby expanding jaw bone anchor 20, 120 radially. Also, inner surface 42 of cylindrical wall 30, 130 of bone anchor 20, 120, and outer surface of jaw bone facing section 78 of dental abutment 70 can have complementary mechanical features that prevents rotation of abutment 70 relative to anchor 20, 120, for example one or more longitudinal grooves that have a corresponding one or more longitudinal ridge that engages with a groove extending along a direction of the center axis CA, for example a ridge that is formed along continuous axial strut 139 of anchor 120, arranged at an inner surface, with a corresponding and complementary engaging groove in abutment 70, or healing abutment 80.

A goal of the radially expandable jaw bone anchor 20, 120 is to provide primary stability for direct loading of a dental implant system 100, having features that allow for strong ossointegration to the jaw bone JB to jaw bone anchor 20, 120, but also strong mechanical connection with abutment 70 or single tooth restoration element 90. The latter can be done by a solid connection and with the smooth inner surface of the cylindrical walls 30, 130 that are complementary to the smooth outer and conical surfaces of jaw-bone facing section 78, 98 of dental implant 70 or single tooth restoration element 90, allowing for a press-fitted connection. Optional structural elements on conical surface of jaw-bone facing section 78, 98 can further help the mechanical attachment. Openings 32, 34, 132 of jaw bone anchor 20, 120 will allow for improved ossointegration, by the bone growth during the healing period that will at least partially fill up the cavities formed by openings 32, 34, 132.

In a variant, instead of using an attachment screw 60 to push and lodge dental abutment 70 towards jaw bone anchor 20, 120, in the situation that is represented by FIG. ID, a threaded rod can be passed through traversing hole 10 and threadably attached to threading of attachment element 45 of jaw bone anchor 20, 120. Thereafter, a plate or bolt with an hole having an threading that either engages inside hole 12 or with upper surface of dental abutment 70 can be used to press abutment 70 into jaw bone anchor, to create expansion force EF.

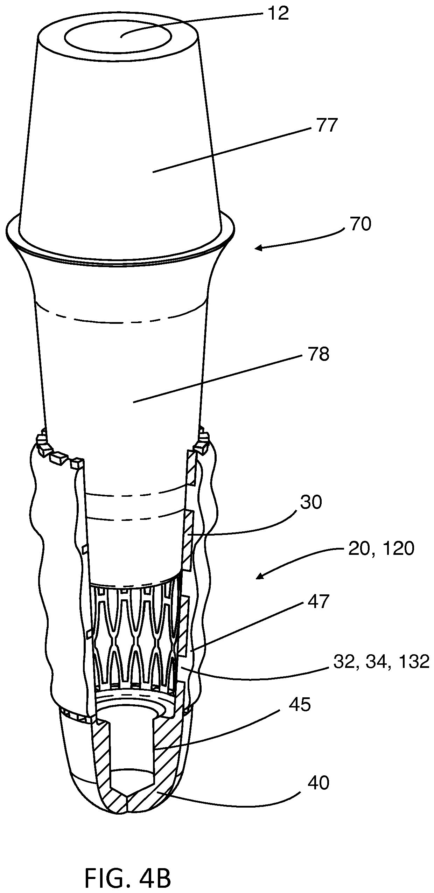

In another variant, an expansion tool 200 is used for expansion, after jaw bone anchor 20, 120 is placed into drilled hole H, and thereafter expansion mechanism 210 of expansion tool 200 is inserted to cylindrical open inner area 42 of jaw bone anchor 20, 120 as shown exemplarily in FIGs. 4B to 4D. The expansion tool 200 is configured to apply a radial expansion force EF1 substantially homogenously to all radial directions 360° away from the central axis CA, along entire cylindrical wall 30 of jaw bone anchor 20, 120. Simultaneously, user, operator, or surgeon of tool 200 will also hold jaw bone anchor 20, 120 inside hole H for the final position of anchor 20, 120. This will transition jaw bone anchor 20, 120 from the first state, where the jaw bone anchor 20, 120 is loosely fitted to drilling hole H, cylindrical wall 30 having a diameter D1 at a given height location, to the second state, where a substantial part of outer surface 43 of cylindrical wall 30 is in pressured contact with structures of the side walls of hole H of jaw bone JB, such that jaw bone anchor 20, 120 is locked into drilling hole H, with cylindrical wall 30 having a diameter D2 that is wider than D1 at the given height location. An absolute range of expansion expressed as a difference between D1 and D2 can be between 0.5 mm to 0.01 mm.

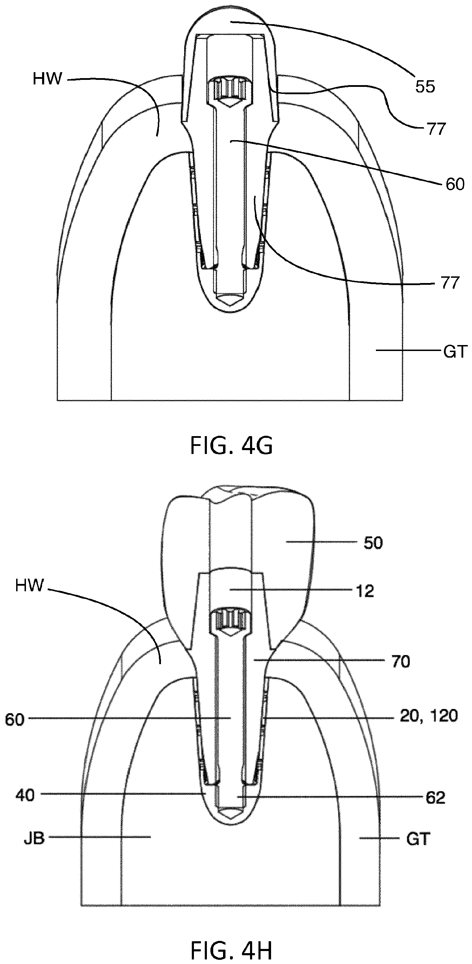

As explained above, the expansion to the second state can be at least partially a plastic deformation, such that upon removal of expansion mechanism 210 of expansion tool 200, the expansion of cylindrical wall 30 to a wider diameter D2 remains, and the pressure to inner bone walls of drilling hole H by expanded cylindrical wall 30 is sustained. This is an aspect that allows to remove tool 200 entirely, while the osso-integration of jaw bone anchor 20, 120 to jaw bone can happen, for example with dental abutment 70 or a specific healing abutment 80 placed into jaw bone anchor 20, 120. In another variant, during the healing period, no other parts or elements other than expanded cylindrical wall 30, 130 inside jaw bone anchor 20, 120 are present, to retain or sustain the expanded state, and upper open end of jaw bone anchor is temporarily sealed with a sealing cap that is later removed, for example as shown with respect to FIG. 4G where the sealing cap 55 is shown, but in this variant no abutment 70 would be present. In this respect, a similar sealing cap can be used that is lodged to inner surfaces 42 of jaw bone anchor 20, 120, in the form of a sealing plug or bud, but no abutment 70 or healing abutment 80. For the case where the plastic deformation of jaw bone anchor 20, 120 is relied upon for the osso-integration period to provide for expansion force to jaw bone JB, walls of jaw bone anchor 20, 120 can have additional mechanical features that are configured to retain the expanded state of jaw bone anchor 20, 120, for example tabs or plates within walls 30 of jaw bone anchor 20, 120 with complementary ratchet-like teeth or sawtooth structure that engage with each other, configured to mechanically retain the expanded state of jaw bone anchor 20, 120, once expanded by an expansion tool.

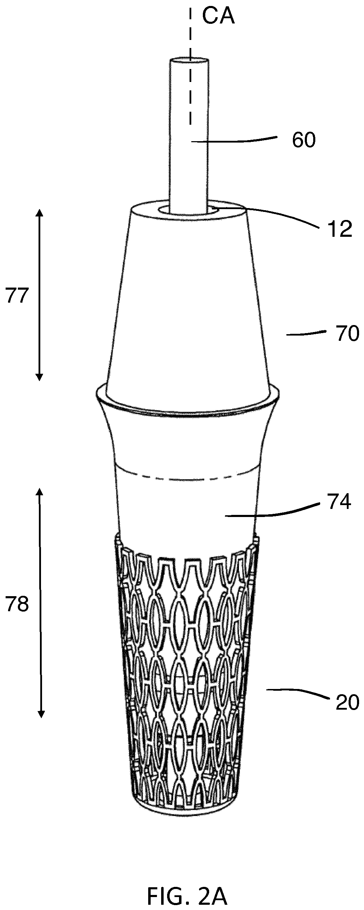

FIG. 2A exemplarily shows a perspective view of dental abutment 70 having a conical crown-facing section 77 and a conical jaw bone facing section 78, and expandable jaw bone anchor 20 engaged with each other by a screw 60 without showing the jaw bone and the crown. Other than screw head accommodating hole 12 and the traversing hole 10 for attachment screw 60, the body of dental abutment 70 is substantially solid to provide for rigidity of attachment between jaw bone JB, jaw bone anchor 20, and crown 50. In a variant, the tapered or conical cylindrical surface of jaw bone facing section 78 has a circularly curved cross-section with no surface structurations to firmly engage with inner surface 42 of cylindrical wall 30, for example by pressing dental abutment 70 towards expandable bone anchor 20 along an axis of longitudinal extension or center axis CA, for example once bone anchor 20 is fixed to jaw bone JB. It is also possible that a surface of jaw bone facing section 78 of dental abutment 70 has structurations, for example fish scale structures, ramps, steps that allow jaw bone facing section 78 of dental abutment 70 to at least temporarily engage with openings 32, 34, of cylindrical wall 30.

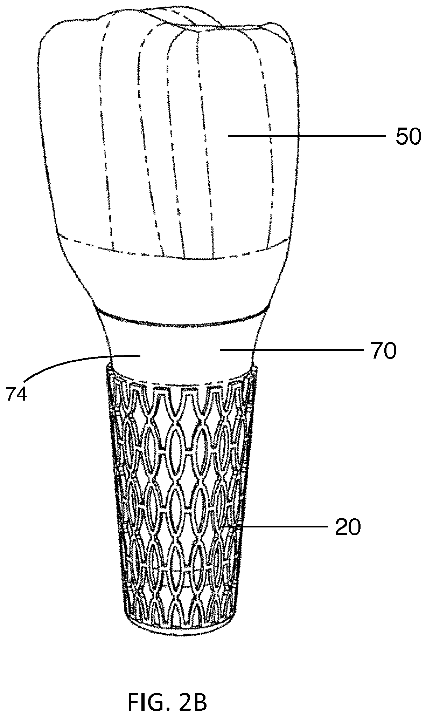

FIG. 2B exemplarily shows a perspective view of the dental abutment 70 and expandable jaw bone anchor 20 engaged with each other by a screw 60, and crown 50. As both the dental abutment 70 and the expandable jaw bone anchor 20 are entirely circularly or axi-symmetrical around axis CA, crown 50 can be attached at any angle relative to conical crown-facing section 77 of dental abutment 70.

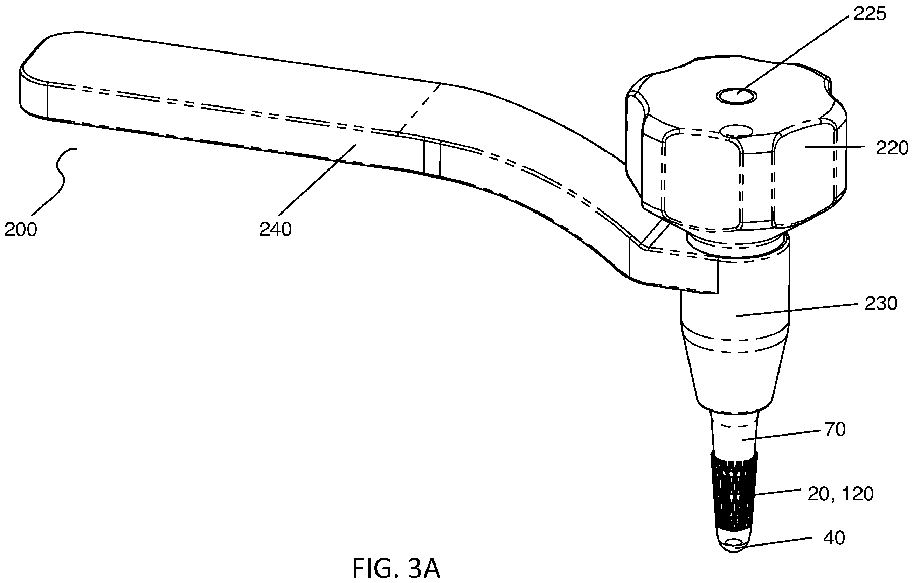

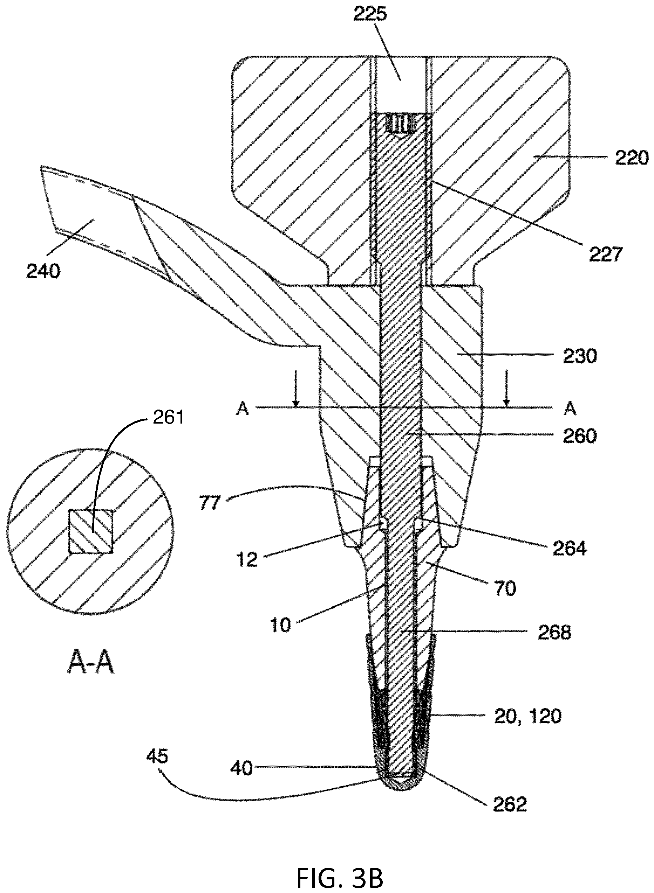

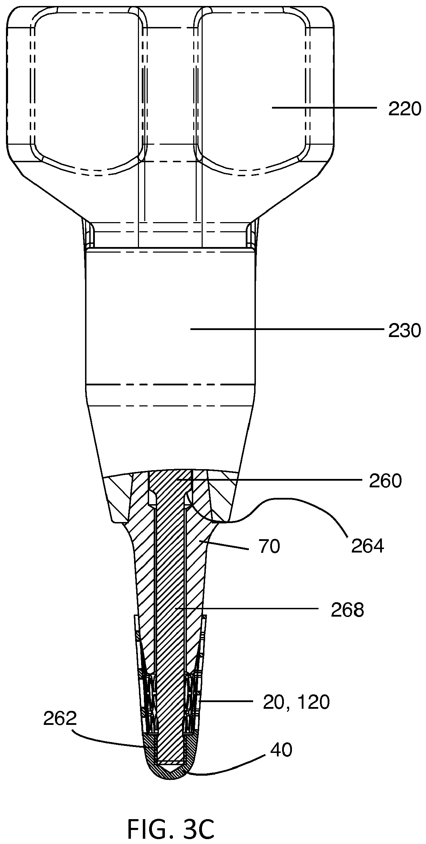

FIGs. 3A to 3C show exemplary different views of an exemplary variant of a placement and expansion tool or device 200, a tool that can be used to insert dental abutment 70 and thereafter expand the expandable jaw bone anchor 20, 120 from a first relaxed state (FIG. ID) to a second expanded state (FID. IE), as a preliminary mechanical attachment to a bone structure of jaw bone JB before ossointegration. FIG. 3A shows a perspective view showing a handle 240, rotary knob 220, head portion 230, dental abutment 70 that is engaged with head portion 230, and a tightening bolt or screw 260 that is rotatably fixed to rotary knob 220, but freely rotatably relative to head portion 230 and dental abutment 70, FIG. 3B shows a side cross-sectional view of the head portion 230, showing the tightening bolt 260 having a lower or distal end threading 262 that corresponds to a lower threading 62 of an attachment screw 62 for the same dental abutment 70, and FIG. 3C shows a side view of a partial cross-section of head portion 230.

With placement and expansion tool or device 200, it is possible to place jaw bone anchor 20, 120 into a hole H of jaw bone JB together with the corresponding dental abutment 70 that will at a later stage will also form the connection element between jaw bone 20, 120 and crown 50, and thereafter, once jaw bone anchor 20, 120 has taken the attachment position inside hole H, can be used to radially expand jaw bone anchor 20, 120 towards jaw bone for fixation. For this purpose, placement and expansion tool or device 200 has a tightening bolt or column 260 that is threadably engaged with rotative knob 220 by a threading 227, but tightening bolt 260 cannot rotate relative to head portion 230, but can move upwards or downwards along rotational axis defined by knob 220 relative to head portion 230. In the variant shown, as seen with cross-sectional view AA of FIG. 3B, section 261 of bolt 260 that lies inside head 230 has a square cross-section that is located within a complementary square-shaped traversing hole of head 230. With threading 227, rotative knob 220 that can be rotated around central axis CA, which leads to an upward or downward motion of tightening bolt 260 relative to head portion 230. Rotative knob 220 can also include a torque limiting feature or force limiting feature that prevents application of a torque or force above a defined threshold, for example a limited threshold torque to rotation of knob 220 relative to handle 240 and head portion 230 that in turn will prevent an excessive force at a defined threshold created by the upward motion of tightening bolt 260 relative to head portion 230. For example, the torque limiting dental tool holder as show in U.S. Patent Publication No. 2018/0055599 could be used for rotative knob 220, this reference herewith incorporated by reference in its entirety. This can be done to prevent overtightening or even destruction of bone anchor 20, 120, and the adjacent bone structures.

First, a lower or distal end of tightening bolt 260 is attached to jaw bone anchor 20, 120 with its attachment mechanism, for example lower threading 262 that engages with threading 45 of jaw bone anchor 20, 120. This attachment mechanism can also be a snap-in, snap-lock, clips, bayonet type, or other type of releasable mechanical attachment. Before attaching bolt 260 to jaw bone anchor 20, 120, abutment 70, or alternatively healing abutment 80, is passed onto lower section 268 of tightening bolt 260 so that lower section 268 passed through central hole 10, such that abutment 70 is located between head 230 and jaw bone anchor 20, 120. Abutment 70 can thereby be removably but securely engaged with head portion 230, for example by lodging conical crown-facing portion 77 of dental abutment 70 into a complementary opening of head portion 230. Thereafter, knob 220 can be rotated in a rotative direction to make sure that annular abutment edge 264 of tightening bolt 260 engages with a annular lower edge of screw head accommodating hole 12, thereby approaching abutment 70 to head portion 230, by moving tightening bolt upwards relative to head portion 230.

Jaw bone anchor 20, 120 can be placed into drilled hole H of jaw bone JB, by using placement and expansion tool 200. Next, once jaw bone anchor 20, 120 is located at a desired position, i.e. is firmly placed into hole H, knob 220 can be rotated to shorten a distance between jaw bone anchor 20, 120 relative to head portion 230, which will progressively lodge or move abutment 70 into jaw bone anchor 20, 120, specifically, jaw bone facing section 78 **of** abutment 70 will further protrude inside open inner area 42 of jaw bone anchor 20, 120, and to radially expand jaw bone anchor 20, 120 by virtue of the conical or sloped outer surface of jaw bone facing section 78, to reach the configuration shown in FIG. IE. Because tightening bolt 268 and head portion 230 of placement and expansion tool 200 are not rotating, this operation will not provide any rotation to jaw bone anchor 20, 120 so that jaw bone anchor 20, 120 can be held at a desired position.

Thereafter, after abutment reaches its final position inside jaw bone anchor 20, 120, and the expansion force EF is established, or jaw bone anchor has reached the diameter D2, rotative knob 220 can be rotated into the other rotational direction to release tightening bolt 260 and its lower section 268 with threading 262 from threading 45 of jaw bone anchor 20, 120, while the abutment 70 remains fully engaged inside jaw bone anchor 20, 120 and continues to apply a radial expansive force to cylindrical walls 30, 130 of jaw bone anchor 20, 120. Once the threadable engagement between threading 262 and threading 45 is undone, tightening bolt 260 with rotative knob 220 can be entirely released from jaw bone anchor 20, 120, and placement and expansion device 200 can be removed. Thereafter, it is possible to attach screw 60 to jaw bone anchor 20, 120 via screw head accommodating hole 12 and central hole 10 of dental abutment 70, or alternatively with healing abutment 80, so that dental abutment 70 and jaw bone anchor 20, 120, can be fixed towards each other for applying a continuous radial pressure to cylindrical walls 30, 130 of jaw bone anchor 20, 120, and to the exposed bone of hole H of jaw bone JB. Thereby, jaw bone anchor 20, 120, dental abutment 70 and screw 60 can be left in this position for osso-integration healing during the healing period, before a crown 50 is mounted to the same dental abutment 70. In this respect, dental abutment 70 serves two purposes, namely as a device that provides for the radial expansion pressure away from central axis CA during the mounting or placement of jaw bone anchor 20, 120 to jaw bone JB by virtue of the shape of the conical crown-facing portion 77, and second as a classic dental abutment 70 being the mechanical interface between a bone anchor and the crown 50.

Next, with FIGs. 4A-4G exemplary steps or stages of a method for anchoring a dental implant 100 to a jaw bone drill hole H is explained and shown, according to a second embodiment of the method.

In FIG. 4A, a user, operator, or dental surgeon drills a drilling hole H with a drill bit DR at a desired implant location IL in the jaw bone JB, the desired location being an anchoring location of dental implant 100. The drilling of drilling hole H can be assisted by a robotic dental surgery system, or for example as shown in U.S. Patent Publication No. 2016/0354169 or U.S. Patent No. 9,901,416, these references herewith incorporated by reference in their entirety. Preferably, drill bit DR is chosen to drill a conical or slightly tapered shape, tapered towards the apical end of drilling hole H, and having a shape that is complementary to outer surface 43 of cylindrical wall 30 of jaw bone anchor 20, 120, and also drilling a drilling hole H with a bottom shape that can accommodate the bottom portion 40, 140 of jaw bone anchor 20, 120, for example a spherical or curved shape, or an opening that provides for sufficient space for bottom portion 40, 140. Preferably, the dimensions of drilling hole H are slightly larger than the dimensions of jaw bone anchor 20, 120 that is to be placed inside hole, for example a diameter D3 at a given height or depth of drilling hole H is larger than a diameter D1 of the non-expanded cylindrical wall 30, 130 of jaw bone anchor 20, 120, so that drilling hole H can easily accommodate jaw bone anchor 20, 120, and jaw bone anchor 20, 120 can easily be placed therein preferably without the need of force or an extra tool. Preferably, a difference in diameters D1 to D3 can be in the approximately in a range of 0.01mm to 0.5 mm.

Next, as shown in FIG. 4B, a step of preparing the jaw bone anchor 20, 120 for placement to hole H can be done, before or after the step of drilling hole H, where outer surface 43, 143 of cylindrical wall 30, 130 is covered or otherwise coated with a bone graft or bone cement 47 for facilitating the bonding of jaw bone anchor 20, 120 to the surrounding bone structure of jaw bone. This is an optional step, as in certain applications no bone cement is needed and the natural bone growth will suffice for ossointegration. This can be done by manually spreading, depositing, or spraying bone cement 47 onto an outer surface where outer surface 43, 143 of cylindrical wall 30, 130 and bottom portion 40, 140, or can be done by robot assistance or full automation. This step can also include the placement or deposition of some of the bone graft 47 to be located inside the openings 32, 34, 132 of walls 30, 130 of jaw bone anchor 20, 120, as shown in FIG. 4B. It is also possible that jaw bone anchor 20, 120 is delivered to the place of dental surgery in a sterile packaging, having the bone cement 47 already placed thereon. In some applications, no bone graft 47 for ossointegration is necessary, and thereby this step can be omitted. In the variant shown, dental abutment 70 is partially inserted into jaw bone anchor 20, 120, and can be used by operator, user, or dental surgeon to hold jaw bone anchor 20, 120, but it is also possible that another device is used while bone graft is distributed on walls 30, 130 of jaw bone anchor 20, 120, for example a special holding tool for a bone graft dispensing machine, or holding jaws or tool of a placement and expansion tool 200, as explained further below.

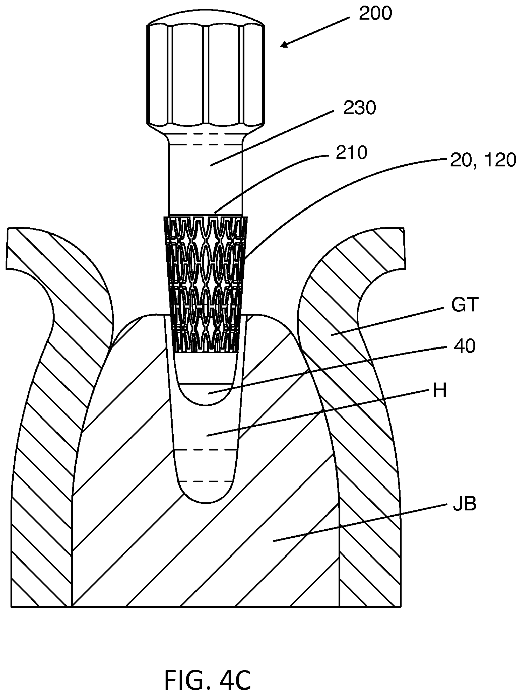

Next, once drilling hole H is prepared, a step is performed where jaw bone anchor 20, 120 is placed or otherwise provided into drilling hole H, as exemplarily illustrated by FIG. 4C. For illustration purposes, no bone graft or cement 47 is shown. This can be done manually by user, operator, or dental surgeon, or can be done or assisted by a robotic surgical assistance device. In the variant shown, a placement and expansion tool or device 200 is used, having jaw bone anchor 20, 120 attached to holding and expansion mechanism 210, and thereby jaw bone anchor 20, 120 is preloaded onto the placement and expansion tool 200, by having inserted expansion mechanism 210 into the opening, cavity, or inner area 42 inside cylindrical wall 30, 130 of jaw bone anchor 20, 120. In this step, jaw bone anchor 20, 120 is linearly, along central axis of hole H, placed or pushed into the jaw bone drill hole H without a threadable engagement of the jaw bone anchor 20, 120 with jaw bone JB. While an outer surface 43 of wall 30, 130 may have structurations for improved adhesion to bone, no thread for threadable engagement with bone needs to be present. Given the dimensions of drilling hole H and bone anchor 20, 120, this should be an operation that requires little effort, such that once in its position, for example by a manual operation of placement and expansion tool 200 to place jaw bone anchor 20, 120 into hole H, bone anchor 20, 120 is loosely fitted or gently press-fitted into drilling hole H, so that outer surface 43 of cylindrical wall 30, 130 is in loose contact with bone surfaces of jaw bone JB. As cylindrical wall 30, 130 is preferably conical, jaw bone anchor 20, 120 can be slightly pressed inside hole H for loose fitting, such that the attachment force being sufficient to temporarily hold jaw bone anchor 20, 120 in place inside hole H, for example when inserted to an upper tooth place, where gravity works against this temporary attachment.

Next, as exemplarily shown in FIG. 4D, the user, operator, or dental surgeon activated or otherwise operates expansion mechanism 210 of the placement and expansion tool 200 to radially expand walls 30, 130 of jaw bone anchor 20, 120 to urge against the exposed walls of jaw bone JB. This establishes a first expansion force EF1 radially away from central axis CA that is sufficient to expand the diameter of jaw bone anchor 20, 120 to urge its walls 30, 130 against jaw bone. In the variant shown, expansion mechanism 210 includes a plurality of circularly-arranged expansion jaws 212 that have a curved outer surface matching the curvature of inner surface 44 of cylindrical wall 30, for example three (3) or more circularly-arranged expansion jaws 212 each covering a substantially equal section of the circumference. This can be done such that a length of expansion jaws 212 of expansion tool 210 are arranged to cover an a substantial part or the entire length of cylindrical wall 30, 130 along a central axis, to allow to expand cylindrical wall 30, 130 from the first, relaxed state to the second, expanded state. The user, operator, or dental surgeon then activates the expansion mechanism 210, for example manually, machine-assisted, or fully automatically, to apply a radial expansion force EF1 away from the center axis, for example but not limited to a duration of 0.5 s to 30 s. This force EF will expand cylindrical wall 30, 130 into inner surface of jaw bone structure of jaw bone JB, inside hole H, in all radial directions away from central axis CA.

Thereafter, jaws 212 of expansion mechanism 210 are radially retracted towards central axis CA to stop providing expansion force EF1 to cylindrical wall 30, 130, and to remove expansion mechanism 210 from inner area 42 of jaw bone anchor 20, 120. As jaw bone anchor 20, 120 can at least partially plastically deform, despite the removal of expansion mechanism 210, jaw bone anchor 20, 120 remains in the expanded state after removal, and applies an expansion force to jaw bone JB, this expansion force being smaller than the first expansion force EF1. Therefore, jawbone anchor 20, 120 is securely lodged inside drilling hole H, by virtue of wall 30, 130 being plastically expanded over a substantial or entire part of outer surface 43, the outer surface 43 substantially homogenously pressed in all radial directions into bone structure of jaw bone JB of inner surfaces of drilling hole H. Optionally, bone cement 47 that was placed on outer surface 43 of cylindrical wall 30 is thereby pressed into the adjacent porous structure of jaw bone, and into the openings or cavities 32, 34, and 132 of cylindrical wall 30, 130, for providing an improved ossointegration basis. The radial expansion and retraction of jaws 212 can be done with a rotative knob 220 that upon rotation in one direction can expand jaws radially aside, and upon rotation in the other direction, can retract jaws 212.

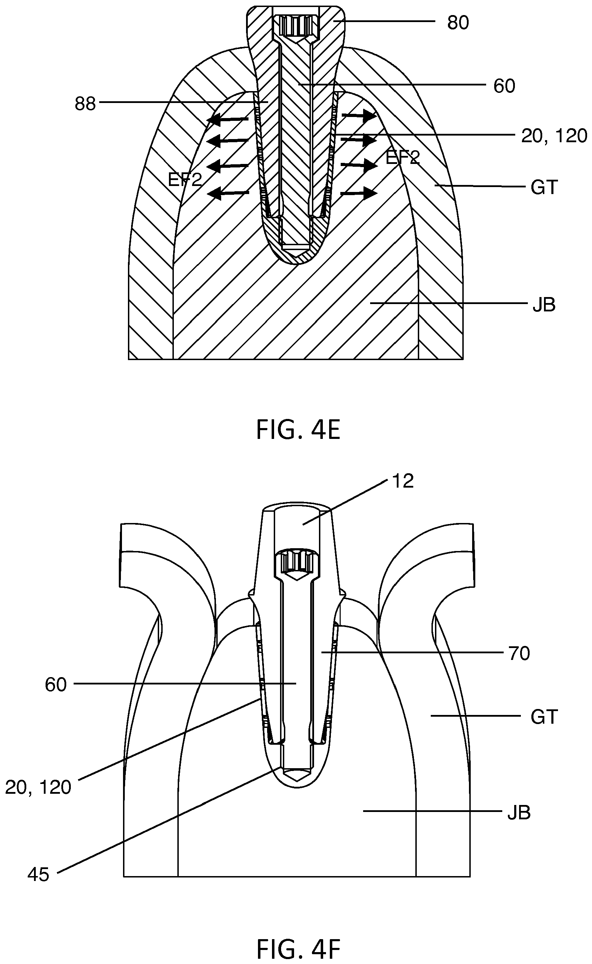

Next, as shown in FIG. 4E, in a variant, healing abutment 80 is placed into inner area 42 of jaw bone anchor 20, 120, and securely attached thereto by using an attachment screw 60. This is done shortly after expansion mechanism 210 of tool 200 is removed from jaw bone anchor 20, 120. Healing abutment 80 is configured such that the urging of its conical shape against walls 30, 130 will apply a second expansion force EF2 to walls 30, 130 of jaw bone anchor 20, 120 via conical jaw bone facing section 88 during the healing period, when tightened to attachment element 45 with attachment screw 60. The placement and attachment of healing abutment 80 for the healing phase is a variant to the method where a regular abutment 70 is used for the healing phase, as shown in FIG. IE. For example, conical jaw bone facing section 88 can be dimensioned such that second expansion force EF2 can be chosen to be smaller than first expansion force EF1 when fully attached to jaw bone anchor 20, 120. Healing abutment 80 can have the exact same dimensions in jaw bone facing section 88 as jaw bone facing section 78 dental abutment 70 that is used for the final assembly of the dental implant 100, but can may have an upper portion that is smaller or has less height than crown facing section 77 of dental abutment 70. In this respect, healing abutment 80 can have the same conically-shaped jaw bone facing section 88, and when healing abutment 80 is fully engaged with jaw bone anchor 20, 120, healing abutment 80 will continue to exert a radial pressure towards walls 30, 130 of jaw bone anchor 20, 120. Also, outer exposed surfaces of healing abutment 80 can be made to have no sharp edges or corners as compared to dental abutment 70. This can be done so that the healing and osso-integrating jaw bone anchor 20, 120 is less exposed to external forces during the healing period, for example pushing by other adjacent teeth, pushing as a result of eating harder food objects, but also to provide for a less intrusive implant in the mouth of a patient or living being during the healing period. In this respect, a top section of healing abutment will protrude less or otherwise stick out less from gum tissue GT of patient or living being as compared to dental abutment 70, and the healing abutment 80 can also have an upper portion that is configured to shape soft tissue regrowth, for example gum tissue GT.

Thereafter, after healing abutment 80 is affixed to jaw bone anchor 20, 120 to be fully engaged with jaw bone anchor 20, 120, the jaw bone anchor 20, 120 is maintained in its expanded state to continue provide expansive force EF2 to walls 30, 130 against jaw bone JB during the healing period. The healing period provides for the osseointegration and bone growth for creating a biological bond between jaw bone anchor 20, 120, for example made of titanium oxide, and jaw bone JB. The waiting time in dental implant loading can be between several hours to six months, more preferably between one week and eighteen weeks. But depending of the dental patient and other factors, direct loading may also be possible.

After the waiting period, as exemplarily shown in FIG. 4E, the jaw bone anchor 20, 120 is osso-integrated to the jaw bone JB. In this step, it is possible to remove healing abutment 80 from jaw bone anchor 20, 120 by removing attachment screw 60, and thereafter cleaning and inspecting jaw bone anchor 20, 120 and jaw for durability and solidness, so that it can be mechanically loaded with dental abutment 70, with crown 50, or both. In this step, inner area 42 of jaw bone anchor 20, 120 is cleaned, inspected for proper ossointegration, and disinfected. Thereafter, as exemplarily shown in FIG. 4F, abutment 70, that can be made of polyether ether ketone (PEEK), titanium or titanium-based material, or ceramic for example but not limited to zirconium, can be placed into inner area 42, an outer surface of jaw bone facing part 78 of abutment 70 having a complementary shape to the inner area 42 of jaw bone anchor 20, 120 in the second, expanded state. Abutment 70 is thereby firmly lodged to jaw bone anchor 20, 120 in any orientation, given its circular-symmetric structure, or alternatively as described above, inner area or surface 42 of jaw bone anchor 20, 120 and/or abutment 70 can have mechanical features that can define a specific angular orientation of abutment 70 relative to jaw bone anchor 20, 120. Thereafter, abutment screw 60 can placed through screw head accommodating hole 12 and central hole 10 to fully traverse abutment 70, to then be securely fastened by threading 62 to the threading of base or lower portion 40 of jaw bone anchor 20, 120 to attachment element 45, by using a screw tightening tool. Screw 60 is equipped with a lower threading 62 at a distal end of the screw 60, that is complementary to a threading of attachment element 45, and has a screw head 64 at a proximal end, with an engagement mechanism for a rotative tool, for example an engagement mechanism for a screw driver, for example a hexagonal socket head or other types of screw heads, for example but not limited to filister heads, torx heads, spanner head with two or more drills, square heads, clutch heats, multiple slot heads, that can engage with corresponding complementary engagement tools with a screw driver.

Next, during a healing phase, following either step of FIG. IE or 4E, as exemplary shown in FIG. 4G, after abutment 70 or healing abutment 80 has been firmly attached to bone anchor 20, 120 for example by screw 60 providing an expansion force EF or EF2, a sealing or temporary protective cap 55 can be placed onto crown-facing portion 77 of dental abutment 70 or top of healing abutment 80. Sealing cap 55 can be a removable protective device, for example made of synthetic material that is flexible, and that does not have any sharp edges and protrusions, and has an inner surface and opening that is complementary to a surface of crown-facing portion 77. In the variant shown, sealing cap 55 has a cylindrical body shape with a semi-spherical top, so that dental patient, user or living being will experience only a limited impact during the healing phase or period, for example when touching cap 55 with his or her tongue, or when eating. Lower edges of sealing cap 55 can also be made such that they are flush with rim or circular edge formed by abutment 70, to avoid an exposure of any sharp edges of abutment 70. During the healing phase, in addition to the ossointegration of bone anchor 20, 120 to jaw bone JB, desired implant location IL that initially has an opening or incision in the gum tissue GT will heal to form at least partially a healed gum HW around dental implant. For the healing abutment 80, protective cap 55 can be made of have a lower profile to reduce a protrusion in a direction of axis CA.

Then, once the healing phase is successfully concluded, for example as determined by a dental surgeon, dental doctor, operator, for example by controlling a status of the healed gum HW and a status of the osso-integration of bone anchor, sealing cap 55 can be removed from either dental abutment 70 or healing abutment 80, and thereafter abutment 70 can be cleaned and disinfected so that crown 50 can be placed to crown-facing portion 77 of dental abutment 70, as shown in FIG. 1A and FIG. 4H, for finalizing the attachment of dental implant 100 to jaw bone JB. Crown 50 can be attached to dental abutment 70 by use of an adhesive. Also, in a variant, healing abutment 80 is removed and replaced by dental abutment 70 to thereafter attach crown 50.

The advantages of the dental implant 100, the dental implant system with dental implant 100 and expansion tool 200, and the method for anchoring a dental implant to a jaw bone drill hole, without the use of a threading on the dental implant, using an expandable jaw bone anchor 30, 130, is substantial. For example, this attachment method and the corresponding expandable jaw bone anchor 30, 130 allows for a free angular orientation or freedom of angular placement of expandable jaw bone anchor 20, 120 relative to the central axis CA of hole H of jaw bone JB, that can be chosen by user, operator, or dental surgeon, without having limitations that are typical for treaded bone implant systems. Also, another advantage is the fact that threaded systems mechanically substantially rely on the threadable engagement between a jaw bone implant by friction and pressure forces, and may be rotated and loosened by vibrations cause by movements of the living being or compressive forces that are applied to the jaw by biting. The present dental implant 100, system 200, jaw bone anchor 30, 130, and method relies on ossointegration with jaw bone JB and anchor 30, 130 with a large surface area for attachment, and does not have these drawbacks. Moreover, pressures exerted by the contact between the expanded jaw bone anchor 30, 130 and the bone surfaces of jaw bone JB are uniform, and substantially spread out over entire outer surface area 43 of cylindrical wall 30, 130 and do cause additional destruction or local pressure points or force points to the jaw bone JB. Local pressure points can lead to inter-jaw tensile and compressive strains that can cause chronic pain, and ultimately lead to failure of the attachment of a dental implant to jaw bone, or can also provide for a non-uniform attachment.

Another advantage is the fact that only jaw bone anchor 30, 130, having a relatively thin cylindrical wall 30, being light in weight and low on volume, can be made of expensive material, e.g. osso-integratable titanium oxide material, while the other parts are not made from such material. This allows to reduce the weight of dental implant 100 and reduce costs. Moreover, with the features of the present device, system, and method, it is possible to strongly simplify the surgical technique or method for placing a dental implant into a jaw, as there is no need for tapping and for tightening, which requires additional tooling and risks of breakage of the jaw bone. This simplifies the implant process, where less tools are needed, and not tricky and failure-prone torque tightening of a threaded dental implant to jaw bone is necessary, risking breaking or otherwise damaging the jaw bone, as this step is entirely eliminated.

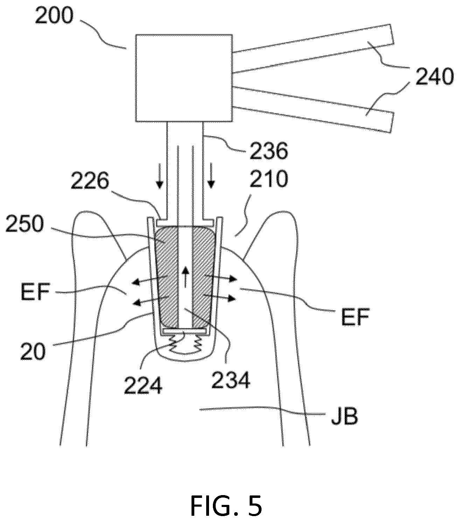

A variant of expansion tool 200 is exemplarily shown in FIG. 5A, where the expansion tool 200 has an expansion mechanism 210 that includes an expandable elastomeric element 250 that can be pressed together in a direction of the center axis CA, that in turn will result in a radial expansion of the expandable elastomeric element 250 in all radial directions away from the center axis CA. FIG. 5A shows the jaw bone anchor 20 placed inside the drilling hole H, and expansion mechanism 210 placed inside inner area or volume of jaw bone anchor 20. A diameter of the expandable elastomeric element 250 is smaller than a corresponding inner diameter of the cylindrical open inner area 42 in a relaxed state, for easy insertion to open inner area 42, and in a compressed state, elastomeric element 250 is configured to expand radially beyond an expanded diameter D2 of jaw bone anchor 20, to radially press against inner surface 43 of wall 30 towards bone structures. This can be done by two disks 224, 226 that sandwich the elastomeric element 250, lower disk 224 able to move upwards by pulling or rod 234, and upper disk 226 simultaneously able to move downwards by pushing of sheath 236 arranged around rod 234, rod 234 traversing elastomeric element 250 by a central hole, so that elastomeric element 250 is compressed along axis CA, and in turn will radially expand. Two handles 240 can be activated by user, for example pressed together, that are coupled to a mechanism that presses sheath 236 downward and pulls rod 234 upward. When the two handles 240 are released, due to pressure exerted by elastomeric element 250, disks 224, 226 are pushed away from each other, and elastomeric element 250 is radially retracted. This allows to safely remove expansion mechanism 210 from inner area 42 of jaw bone anchor 20. Preferably, elastomeric element 250 can have a complementary shape to inner area 42 of jaw bone anchor 20, for example it can be tapered or conical. Also, it is possible to use several rings of elastomeric elements 250.

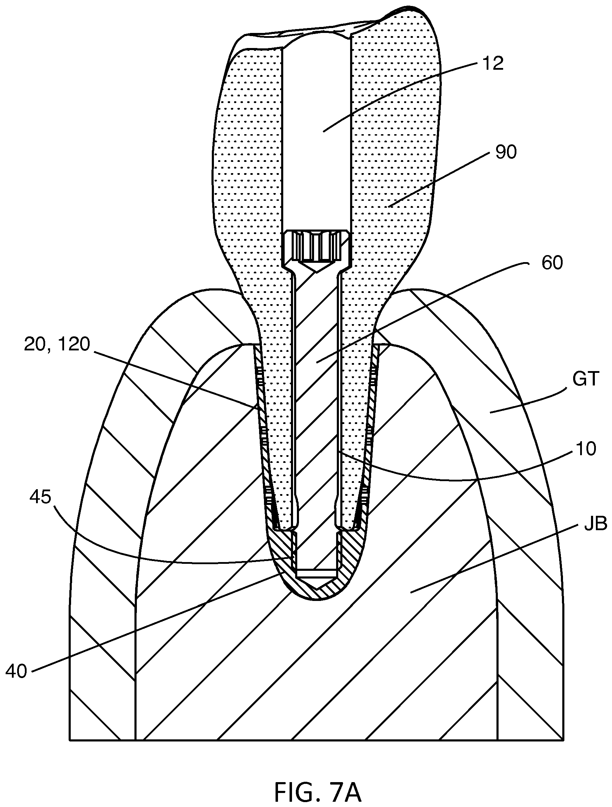

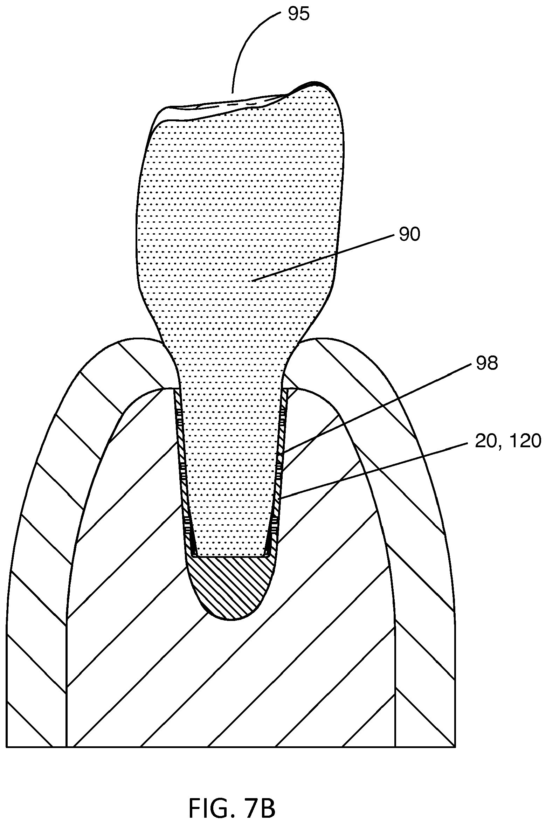

In a variant, the dental abutment 70 has a solid core and does not have a traversing hole 10 for attachment by screw 60. In this variant, dental abutment 70 is attached to expandable jaw bone anchor 20, 120 with an adhesive, and lower portion or bottom section 40 of expandable jaw bone anchor 20, 120 does not have an thread or other attachment part or element 45. For example, jaw-bone facing section 78 of dental abutment 70 can be covered or deposited with an adhesive, for example a dental bonding agent or dental adhesive system, for example a one-step agent, and thereafter, dental abutment 70, that in this variant can also include crown 50, is placed into expandable jaw bone anchor 20, 120 at the desired orientation for adhesion. Dental abutment 70 can also be attached to jaw bone anchor by press-fit. Dental abutment 70 can also be combined with the restoration tooth, i.e. the crown 50 for forming a single part implant together with expandable jaw bone anchor 20, 120, as discussed below with FIGs. 7A and 7B.

FIG. 6A shows a cross-sectional view of the walls 30 of the expandable jaw bone anchor 20, 120, to show different layers of material that can be used. For example, an inner layer 332 that will face and will be configured to engage with conical crown-facing portion 77 of dental abutment 70 can be made of solid material, providing for a flat or non-structured surface towards dental abutment 70, for example titanium oxide. An outer layer 336 that is configured to engage with bone material can have a mechanical structuration that increased speed and mechanical strength of the ossointegration, for example a porous layer, a layer having a porous trabecular structure, a layer having dents, ridges, grooves, and sinks to provide for roughened surface towards bone material of jaw bone JB. This layer can be provided by a three-dimensional (3D) printing technique to be built up onto inner layer 332. The outer layer 336 can be made to include bioactive agents for the ossointegration. Next, a middle layer 334 can be provided that serves as an interface between the inner layer 332 and the outer layer 336, to provide for additional strength and adhesion between the two, if necessary. For example, this layer can be a roughened surface layer with a granularity that substantially helps the adhesion of three-dimensionally printable Titanium powder material. FIG. 6B shows another variant with protruding structurations 31 on outer surface 42 of wall 30 of jaw bone anchor 20, 120, as discussed above.

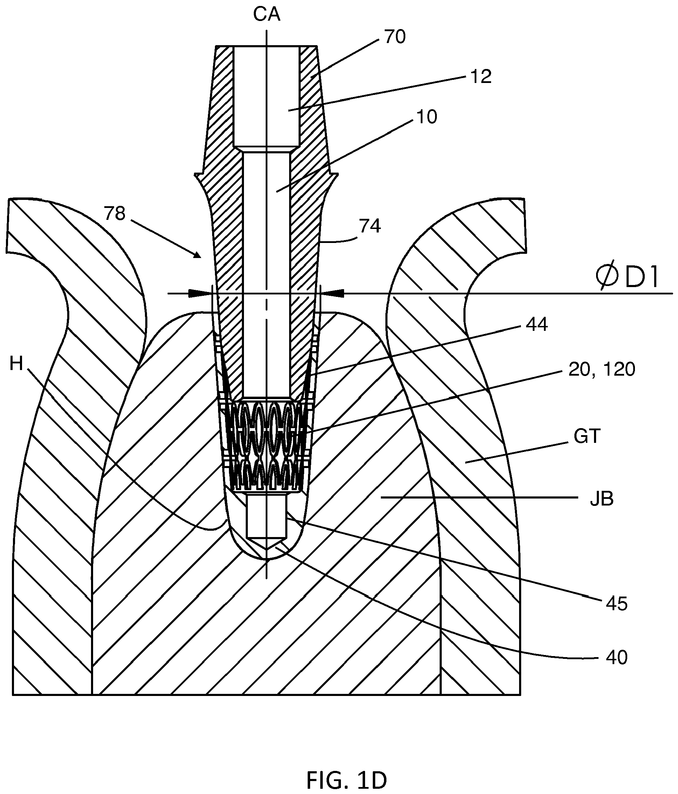

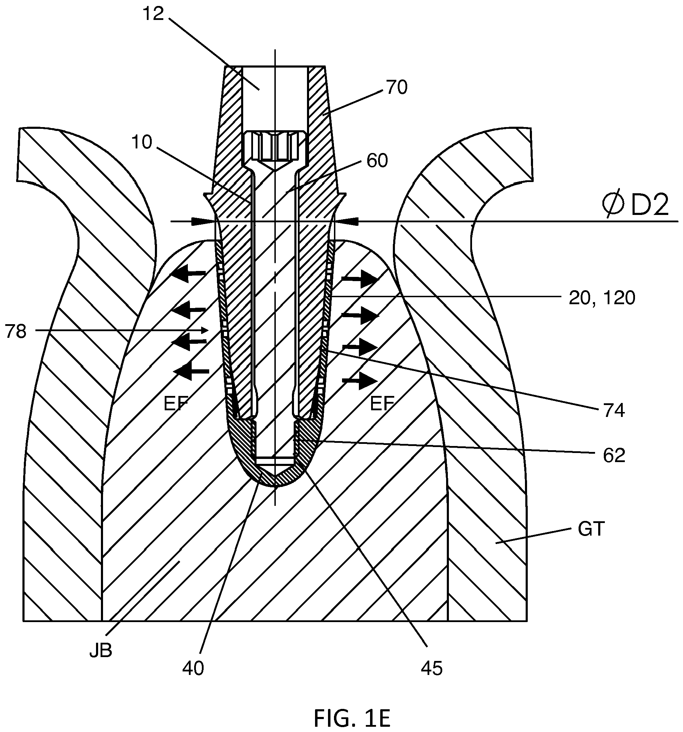

FIGs. 7A and 7B schematically show an aspect of another embodiment, where the crown 50 and dental abutment 70 are combined into a single element or device, to form a single tooth restoration element 90. Tooth restoration element 90 is traversed by screw head accommodating hole 12 and traversing hole 10 so that an attachment screw 60 can be put into tooth restoration element 90 and attached to attachment element 45 of placing jaw bone anchor 20, 120. The installation of single tooth restoration element 90 can be done as shown in FIGs. 1D and 1E, where the single tooth restoration element 90 will serve as radial expansion element to provide for expansion force EF for the healing period, and will later also serves as the abutment and crown as forming the visible part of the prosthetic tooth 100. In a variant, the installation can be done as shown in FIGs. 4D to 4G, where placement and expansion tool 200 is used to apply a first expansive force EF1 during a short duration, and thereafter, a low-profile healing abutment 80 is used to apply second expansive force during the healing period, and thereafter, after removing healing abutment 80, single tooth restoration element 90 is screwably attached to jaw bone anchor 20, 120 with attachment screw, instead of separately placing abutment 70 and then crown 50 to abutment. Hole 12 can be sealed with a sealing 95. This variant has the advantage that fewer parts are needed for the prosthetic tooth 100, but also it lacks the necessary interconnection between crown 50 and abutment 70, which can be done by an adhesive. This can provide for a more solid prosthetic tooth 100 for the patient or living being. Moreover, the variant shown in FIG. 7B can be a single restoration tooth element 90 that is attached to bone anchor 20, 120 by other means, and does not use a screw 60, and also does not have a traversing hole 10, 12. For example, an adhesive, a press-fit, or a type of mechanical lock can be used to attach single restoration tooth element 90 to bone anchor 20, 120.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention not be limited to the described embodiments, and be given the broadest reasonable interpretation in accordance with the language of the appended claims.

## Claims

1. A dental implant system comprising:
a jaw bone anchor forming a hollow structure with an cylindrical open inner area, the jaw bone anchor including,
a cylindrical wall having an outer surface and an inner surface, the wall having a plurality of openings, and
an attachment element arranged at a jaw-bone facing section of the jaw bone anchor; and
a dental abutment for attachment to the jaw bone anchor via the attachment element, a jaw-bone facing section of the dental abutment having an exterior shape that is complementary to the cylindrical open inner area inside the inner surface of the cylindrical wall.

2. The dental implant system according to claim 1, further comprising:
an expansion tool having an expansion mechanism for insertion into the hollow structure of the jaw bone anchor and for radially expanding the cylindrical wall of the jaw bone anchor.

3. The dental implant system according to claim 1, further comprising:
an attachment screw,
wherein the dental abutment further includes a central bore, and the attachment element of the jaw bone anchor is a threaded hole for engaging with the attachment screw.

4. The dental implant system according to claim 1, wherein the jaw bone anchor is made of titanium or a titanium alloy, and the dental abutment is made of at least one of PEEK, titanium alloy, or a ceramic material.

5. The dental implant system according to claim 1, wherein the cylindrical wall of the jaw bone anchor is tapered towards the jaw-bone facing section, and the outer surface of the cylindrical wall is threadless.

6. The dental implant system according to claim 1, wherein the outer surface of the cylindrical wall includes ossointegration structures.

7. The dental implant system according to claim 1, wherein the plurality of openings of the cylindrical wall are formed to traverse the cylindrical wall such that the cylindrical wall is a mesh-like structure permitting radial expansion.

8. The dental implant system according to claim 1, wherein at least some of the plurality of openings have an elliptical or lens-like shape with a semi-major axis extending in parallel to axial direction of the cylindrical wall.

9. The dental implant system according to claim 1, wherein the dental can include a prosthetic tooth crown.

10. An expandable jaw bone anchor for threadless engagement with a jaw bone, the jaw bone anchor comprising:
an expandable cylindrical wall having an outer surface and an inner surface, the cylindrical wall forming a hollow structure with a cylindrical open inner area, the cylindrical wall having a plurality of openings, and
an attachment element arranged at a jaw-bone facing section of the jaw bone anchor,
wherein the expandable cylindrical wall is configured to be radially expanded.

11. The jaw bone anchor according to claim 10, wherein the cylindrical wall of the jaw bone anchor is tapered towards the jaw-bone facing section, and the outer surface of the cylindrical wall is threadless.

12. The jaw bone anchor according to claim 10, wherein cylindrical wall includes a first inner layer of solid material, and a second outer layer including the outer surface with ossointegration structures.

13. The jaw bone anchor according to claim 10, wherein the plurality of openings of the cylindrical wall are formed to traverse the cylindrical wall such that the cylindrical wall is a mesh-like structure permitting radial expansion.

14. The jaw bone anchor according to claim 10, wherein at least some of the plurality of openings have at least one of an elliptical shape, a lens-like shape with a semi-major axis extending in parallel to axial direction of the cylindrical wall, or diamond shape.

15. The jaw bone anchor according to claim 10, wherein the inner surface of the cylindrical wall forms a smooth surface to match to a shape of a dental abutment formed as a tapered cylinder.

16. The jaw bone anchor according to claim 10, wherein the expandable cylindrical wall is configured to be radially expanded in all radial directions.

17. A method for anchoring a dental implant to a jaw bone drill hole, comprising the steps of:
inserting a jaw bone anchor with an cylindrical open inner area into the jaw bone drill hole, the jaw bone anchor including a cylindrical wall having an outer surface and an inner surface, the wall having a plurality of openings, and an attachment element arranged at a jaw-bone facing section of the jaw bone anchor; and
radially expanding the cylindrical wall of the jaw bone anchor towards bone structures of the jaw bone drill hole.

18. The method according to claim 17, wherein the step of radially expanding comprises:
inserting a dental abutment into the cylindrical open inner area of the jaw bone anchor, a jaw-bone facing section of the dental abutment having an exterior shape that is tapered and complementary to the cylindrical open inner area inside the inner surface of the cylindrical wall; and
attaching the dental abutment to the jaw bone anchor via the attachment element.

19. The method according to claim 17, wherein the step of radially expanding comprises:
inserting an expansion mechanism of an expansion tool into the cylindrical open inner area;
activating the expansion mechanism to radially expand the cylindrical wall of the jaw bone anchor towards bone structures of the jaw bone drill hole; and
removing the expansion tool from the jaw bone drill hole.

20. The method according to claim 17, wherein the step inserting the jaw bone anchor includes a placing the jaw bone anchor linearly into the jaw bone drill hole without a threadable engagement of the jaw bone anchor with the jaw bone.

21. The dental implant system according to claim 1, wherein the dental abutment is an integral part of a dental restoration crown.
